# EUROPÄISCHE PATENTSCHRIFT

(11) **EP 3 272 725 B1**
(45) Veröffentlichungstag und Bekanntmachung des Hinweises auf die Patenterteilung: **06.02.2019**
(21) Anmeldenummer: 17001199.3
(22) Anmeldetag: 13.07.2017
(51) Int. Cl.: C04B 41/71, C04B 41/52

(54) **BESCHICHTUNGSSYSTEM UND VERFAHREN ZUM ÜBERBRÜCKEN VON DURCH DYNAMISCHE UND/ODER MECHANISCHE BELASTUNGEN HERVORGERUFENEN RISSEN**
COATING SYSTEM AND METHOD FOR BRIDGING CRACKS INDUCED BY DYNAMIC AND/OR MECHANICAL STRESS
SYSTÈME DE REVÊTEMENT ET PROCÉDÉ DESTINÉ À COMBLER DES FISSURES PROVOQUÉES PAR DES CHARGES MÉCANIQUES ET/OU DYNAMIQUES

(30) Priorität: 18.07.2016 DE 102016008566; 12.07.2017 DE 102017006570
(43) Veröffentlichungstag der Anmeldung: 24.01.2018
(73) Patentinhaber: M + S Metallschutz GmbH, 15537 Erkner (DE)
(72) Erfinder: Meyer, Heinrich, D-16713 Königs Wusterhausen (DE); Reichert, Anton, D-21035 Hamburg (DE)
(74) Vertreter: Cohausz Hannig Borkowski Wißgott

(56) Entgegenhaltungen:
- EP-A1- 0 955 282
- WO-A1-98/58981
- DE-A1- 4 303 124
- DE-U1-202016 004 386

## Beschreibung

Die Erfindung betrifft ein Beschichtungssystem zum flüssigkeitsdichten Überbrücken von durch dynamisch und/oder mechanische Belastungen hervorgerufene oberflächennahe Risse in mit aggressiven Flüssigkeiten beaufschlagten Untergründen, beispielsweise zementgebundenen Böden, Betonflächen von Auffangwannen, Auffangräumen und Anlagen zum Lagern, Umfüllen und Umschlagen dieser Flüssigkeiten o. dgl., mit einer auf dem Untergrund aufgebrachten Grundierung aus Epichlorhydrinharz und einer Epichlorhydrinharz-Deckschicht, wobei die Grundierung und die Deckschicht jeweils unterschiedlich formuliert sind und aus einem lösemittelfreien Gemisch auf Bisphenol A- und/oder Bisphenol F-Basis, Glycidylether als Reaktionsverdünner, einem Härtungsmittel auf Basis eines Aminadduktes aus einem Polyamin und/oder aus Basisaminen mit primären, sekundären und tertiären Aminogruppen und Hilfsstoffe im unausgehärteten Zustand bestehen und das Mischungsverhältnis von Harz (Kompomente A) und Härtungsmittel (Komponente B) für die Grundierung 2:1 und für die Deckschicht 1:1 beträgt.

Die Erfindung betrifft weiterhin ein Verfahren zum flüssigkeitsdichten Überbrücken von durch dynamisch und/oder mechanischen Belastungen hervorgerufene oberflächennahe Risse in mit aggressiven Flüssigkeiten beaufschlagten Untergründen, beispielsweise zementgebundene Böden bzw. Betonflächen von Auffangwannen, Auffangräumen und Anlagen zum Lagern, Umfüllen und Umschlagen dieser Flüssigkeiten, bei der auf den Untergrund eine Grundierung aus Epichlorhydrinharz und eine Epichlorhydrinharz-Deckschicht durch Spachteln, Streichen, Rollen oder Spritzen aufgebracht wird, wobei die Grundierung und die Deckschicht jeweils unterschiedlich formuliert sind und ein lösemittelfreies Gemisch einer Komponente A auf Bisphenol -A- und/oder Bisphenol -F-Basis, Glycidylether als Reaktionsverdünner und einer Komponente B aus einem Härtungsmittel eines Aminadduktes aus einem Polyamin und/oder aus Basisaminen mit primären, sekundären und tertiären Aminogruppen und Hilfsstoffe bei mindestens 5 °C bis maximal 30 °C zur Reaktion gebracht wird, wobei das Mischungsverhältnis der Komponente A zur Komponente B für die Grundierung auf 2:1 und für die Deckschicht auf 1:1 eingestellt wird.

### Stand der Technik

Es ist allgemein bekannt, dass die Rissbildung im Beton nicht grundsätzlich vermieden werden kann, so dass die einschlägigen Regelwerke für den Anwendungszweck entsprechende zulässige Grenzwerte in den Rissbreiten vorgeben. Nach DIN 1045-1 führen beispielsweise Rissbreiten >0,4 zu einer Gefährdung der Dauerhaftigkeit des Betons. Risse aufweisende Betonflächen mit Epoxidharzen abzudichten, gehört seit langem zum Stand der Technik.

So sind Beschichtungssysteme bekannt, die aus mehrfach übereinander angeordneten Lagen oder Schutzschichten bestehen (DE 40 26 943, DE 43 39 206 C2, EP 0 955 282 A1), wobei die direkt auf den Untergrund aufgebrachte Schicht die durch Dauerbelastung einwirkenden Druck-, Zug- und Scherkräfte elastisch aufnimmt und die darüber liegende zweite Schutzschicht die Abdichtfunktion übernimmt.
Zum Stand der Technik gehört aber auch ein chemikalienbeständiges rissüberbrückendes Beschichtungssystem, das aus einer Imprägnierung des Untergrundes auf Epoxidharz- oder Polyurethanbasis, einer oder mehreren Verstärkungseinlagen und einer Basis- und Deckbeschichtung besteht (DE 43 03 124 A1).
Derartige Systeme erfordern einen verhältnismäßig großen Materialeinsatz, sind zeitaufwändig und teuer in ihrer Herstellung, so dass sich derartige Schutzsysteme in Auffangwannen oder Auffangräumen für KTL-Bäder und Anlagen zum Lagern, Umfüllen und Umschlagen dieser Flüssigkeiten infolge ihrer Unwirtschaftlichkeit nicht durchsetzen konnten.

Weiterhin sind aus der CH 689 867 A5 befahrbare und begehbare Beschichtungen zementgebundener Untergründe auf der Grundlage von gehärtetem Reaktionsharz bekannt, wobei die Beschichtung elastomere Partikel einer Korngröße von 0,3 bis 2 mm enthält.
Die elastomeren Partikel werden in dem zementgebundenen Bereich der Beschichtung angereichert.
Diese bekannte Schutzschicht hat den Nachteil, dass die extern zugesetzten elastomeren Partikel nicht reaktiv sind und nicht vernetzt werden, wodurch die Chemikalienbeständigkeit, insbesondere bei dynamischer Belastung, beeinträchtigt wird. Eine solche Beschichtung ist für den Einsatz in Auffangwannen, Auffangräumen von KTL-Bädern und Anlagen zum Lagern, Umfüllen und Umschlagen dieser Flüssigkeiten nicht geeignet.

Des Weiteren ist es aus der DE 42 06 392 A1 bekannt, dass die Elastizität eines Epoxidharzes intern durch den Härter wie beispielsweise Polyamidamine in gewissen Grenzen gesteuert werden kann. Die dadurch erreichten zähelastischen Eigenschaften reichen jedoch nicht aus, um Rissüberbrückungen von >0,2 mm bei Betoriflächen in Auffangwannen, Auffangräumen von KTL-Bädern und Anlagen zum Lagern, Umfüllen und Umschlagen dieser Flüssigkeiten dauerhaft flüssigkeitsdicht zu überbrücken.

Außerdem ist aus der EP 1 167 479 B1 ein Anstrichmittel, -masse bzw.- -farbe bekannt, welche für einen Auftrag bzw. eine Aufbringung in bzw. unter Wasser auf dort befindliche Objekte, Flächen, Substrate, Untergründe o. dgl., bevorzugt aus Holz, Kunststoff, Stein, Beton, Metallischen Materialien, Stahl, metall-gecoatetem Stahl o. dgl. vorgesehen ist. Die Basis für diese Mittel ist aus Epoxid- und/oder Bisphenol-A- und/oder -F-Harzen als Harz-Komponente und (Poly)-Aminen als Härter-Komponente gebildet, welche weitere Beschleuniger, Pigmente, Verlaufsadditive, Glättungsmittels und andere Zusatz- und Hilfsmittel enthalten.
Dieser bekannte Anstrich mag zwar für die Anwendung unter Wasser durch seine besondere Korrosionsschutzwirkung geeignet sein, kann aber Risse, die insbesondere bei Betonuntergründen durch Zug-, Biege und Scherbelastungen entstehen, nicht überbrücken, weil die zähelastischen Eigenschaften dieses bekannten Anstriches unzureichend sind.

### Aufgabenstellung

Bei diesem Stand der Technik liegt der Erfindung die Aufgabe zugrunde, ein Beschichtungssystem und ein Verfahren zum Überbrücken von durch dynamisch und/oder mechanisch Belastungen hervorgerufene oberflächennahe Risse in mit aggressiven Flüssigkeiten beaufschlagten Untergründen, beispielsweise zementgebundene Böden oder Betonflächen von Auffangwannen, Auffangräumen in KTL-Bädern und Anlagen zum Lagern, Umfüllen und Umschlagen dieser Flüssigkeiten bereitzustellen, die in der Lage sind, Rissbreiten von bis zu 1,0 mm bei mechanischer und/oder dynamischer Beanspruchung und gleichzeitiger Reduzierung des Aufwandes und des Materialeinsatzes dauerelastisch dicht und chemikalienbeständig sicher zu überbrücken.

Diese Aufgabe wird durch ein Beschichtungssystem der eingangs genannten Art mit den Merkmalen des Anspruches 1 und durch ein Verfahren mit den Merkmalen des Anspruches 10 gelöst.

Vorteilhafte Ausgestaltungen des erfindungsgemäßen Beschichtungssystems sind den Unteransprüchen entnehmbar.

Die erfindungsgemäße Lösung geht von der überraschenden Erkenntnis aus, dass die Dauerelastizität des Beschichtungssystems durch zusätzliche intern reaktiv wirkende Bestandteile im Harz und/oder Härtungsmittel deutlich erhöht werden kann, wenn gleichzeitig die Haftung auf dem Untergrund durch zusätzliche Haftvermittler im Harz und/oder Härtungsmittel verbessert wird.
Dies wird dadurch erreicht, dass die Komponente A und/oder Komponente B der Deckschicht jeweils bezogen auf die Gesamtmenge aller Komponenten enthalten:
a) zusätzlich intern reaktiv auf die Dauerelastizität wirkende Verbindungen zwischen 2 und 20 Gew.-%, welche mit Epoxidharzanteilen verknüpfte funktionelle Butadien-Acrylnitrilkautschuke, hyperverzweigte Polymere, Expoxid-Silicon-Copolymere, Siliconkautschukpar- tikel, funktionelle Siliconharze, Umsetzungsprodukte von Aminen, Amiden, Aminoamiden mit Acrylnitril oder Kautschuken oder deren Gemische umfassen, und
b) haftvermittelnde Verbindungen zwischen 1 und 10 Gew.-%, die Alkoxysilane, Vinylpyrrolidone, Vinylimidazole, Peptide, silangepfropfte Polymere, säure- und aminfunktionelle Polymere, Alkoholethoxylate, Phosphorsäureester oder Aluminate, Titanate, Zirkonate oder Gemische daraus umfassen,
wobei und die Deckschicht mit der nicht vollständig ausgehärteten Grundierung einen innigen flüssigkeitsundurchlässigen und chemisch beständigen Verbund beim gemeinsamen Aushärten bildet, der entstehend Risse bis zu einer Breite von maximal 1,0 mm überbrückt.

Die Kombination dieser zusätzlichen Verbindungen beim Einbau in die Vernetzungsstruktur ermöglicht es, die Vernetzungsdichte gezielt auf die gewünschten Eigenschaften wie Elastizität für eine Rissüberbrückung bis zu 1,0 mm bei dynamischer Beanspruchung und Chemikalienbeständigkeit des Beschichtungssystems einzustellen.

In einer weiteren vorteilhaften Ausführungsform des erfindungsgemäßen Beschichtungssystems ist vorgesehen, dass die Deckschicht aus einer einzigen Lage gebildet ist, die aus der Komponente A mit 20,0 bis 50,0 Gew.-% Epichlorhydrinharz vom Bisphenol-A und/oder F-Typ, 5,0 bis 30 Gew.-% Reaktivverdünner, 2,0 bis 20 Gew.-% epoxidhaltige Verbindungen mit adduktierten oder vorpolymerisierten Bestandteilen für eine dauerhafte Elastizität im Harz und der Komponente B mit 5,0 bis 30 Gew.-% primäre und/oder sekundäre Aminen und ihre Addukte mit epoxidhaltigen Verbindungen oder deren Gemischen sowie 0,0 Gew.-% bis 25,0 Gew.-% Polyamide, Polyaminoamide oder Gemische daraus, 5,0 bis 25 Gew.-% Umsetzungsprodukte von Aminen, Amiden Aminoamiden mit Acrylnitril oder Kautschuken oder deren Gemischen besteht, wobei die Komponenten A und B jeweils 0,0 Gew.-% bis 5,0 Gew.-% Hilfsstoffe zum Steuern der Reaktivität zwischen Harz und Härter, 1,0 Gew.-% bis 10,0 Gew.-% haftvermittelnde Bestandteile, i0,0 Gew.-% bis 20,0 Gew.-% inerte Verdünner, 0,0 Gew.-% bis 10,0 Gew.-% Entlüfter, Verlaufsmittel, Benetzungshilfsmittel, Emulgatoren, Reaktionsbeschleuniger oder Katalysatoren, 0,0 Gew.-% bis 6,0 Gew.-% Thixotropiermittel und 0,0 Gew.-% bis 50,0 Gew.-% Füllstoffe und Pigmente enthalten.

In einem weiteren bevorzugten Merkmal des erfindungsgemäßen Beschichtungssystem umfasst der Reaktivverdünner mono-, di-, tri- oder höher funktionelle epoxidhaltige Verbindungen, beispielsweise C12-C14-monoglycidylether, C13-C15-monoglycidylylether, Ethylhexylmonoglycidylether, p-tert.Butylphenylglycidylether, Butylmonoglycidylether, Butandioldiglycidylether, Hexadioldiglycidylether, Trimethylolpropantriglycidylether oder deren Gemische.

In einer weiteren vorteilhaften Ausgestaltung der Erfindung umfassen die Hilfsstoffe zum Steuern der Reaktivität Salicylsäure; p-Toluolsulfonsäure oder ihre Ester, Phenol oder Phenol-Derivate mit sauren OH-Gruppen oder Gemische daraus.

Nach einem weiteren bevorzugten Merkmal des erfindungsgemäßen Beschichtungssystems umfassen die inerten Verdünner hochsiedende Ester der Adipinsäure, Phthalsäure oder Terephthalsäure, Benzoate, hochsiedende Kohlenwasserstoffe und Kohlenwasserstoffharze.

In einer vorteilhaften Ausgestaltung der Erfindung umfassen die Füllstoffe und Pigmente Quarze, Talke, Kaoline, Schwerspate, Titandioxide oder Farbpigmente, mit denen die Verarbeitungskonsistenz des erfindungsgemäßen Beschichtungssystems eingestellt werden kann.

Von besonderem Vorteil des erfindungsgemäßen Beschichtungssystems ist, dass die Deckschicht nur aus einer einzigen Lage mit einer Dicke zwischen 1,2 mm und 2,0 mm besteht, so dass die Verarbeitungsmengen an Harz und Härter entsprechend gering sind.
Die einlagige dauerelastische und chemiekalienbeständige Deckschicht besitzt trotz ihrer geringen Dicke eine Rissüberbrückung bis zu 1,0 mm, wodurch das Beschichtungssystem besonders für die Sanierung von Risse aufweisenden, mit chemisch aggressive Flüssigkeiten beaufschlagten Untergründen, die aufgrund dynamischer und/oder mechanischer Belastung zur Rissbildung neigen oder sicherheitshalber davor geschützt werden sollen.

Die Aufgabe wird weiterhin durch ein Verfahren dadurch gelöst, dass der Komponente A und/oder Komponente B des Gemisches für die Deckschicht jeweils bezogen auf die Gesamtmenge aller Komponenten zugesetzt werden:
a) zusätzlich intern reaktiv auf die Dauerelastizität wirkende Verbindungen zwischen 2 und 20 Gew.-%, wobei mit Epoxidharzanteilen verknüpfte funktionelle Butadien-Acrylnitrilkautschuke, hyperverzweigte Polymere, Expoxid-Silicon-Copolymere, Siliconkautschukpar- tikel, funktionelle Siliconharze, Umsetzungsprodukte von Aminen, Amiden, Aminoamiden mit Acrylnitril oder Kautschuken oder deren Gemische verwendet werden und
b) haftvermittelnde Verbindungen zwischen 1 und 10 Gew.-%, wobei als haftvermittelnden Verbindungen Alkoxysilane, Vinylpyrrolidone, Vinylimidazole, Peptide, silangepfropfte Polymere, säure- und aminfunktionelle Polymere, Alkoholethoxylate, Phosphorsäureester oder Aluminate, Titanate, Zirkonate oder Gemische daraus verwendet, und dass das Gemisch auf die nicht vollständig ausgehärtete, noch nasse Grundierung nach einer Wartezeit von mindestens 6 bis maximal 8 Stunden aufgetragen wird, so dass die Grundierung und die Deckschicht gemeinsam zu einem innigen flüssigkeitsundurchlässigen, chemisch beständigen zähelastischen, Risse bis zu einer Breite von maximal 1,0 mm überbrückenden Verbund beim Aushärten reagieren.

Die weitere Ausgestaltung des erfindungsgemäßen Verfahrens sieht vor, dass als Komponente A für die Deckschicht 20,0 bis 50,0 Gew.-% Epichlorhydrinharz vom Bisphenol-A- und/oder -F-Typ, 5,0 bis 30 Gew.-% Reaktivverdünner, 2,0 bis 20 Gew.-% epoxidhaltige Verbindungen mit adduktierten oder vorpolymerisierten Bestandteilen für eine dauerhafte Elastizität im Harz und als Komponente B 5,0 bis 30 Gew.-% primäre und/oder sekundäre Amine und ihren Addukte mit epoxidhaltigen Verbindungen oder deren Gemischen sowie 0,0 Gew.-% bis 25,0 Gew.-% Polyamide, Polyaminoamide oder Gemische daraus, 5,0 bis 25 Gew.-% Umsetzungsprodukte von Aminen, Amiden Aminoamiden mit Acrylnitril oder Kautschuken oder deren Gemisch verwendet werden, wobei die Komponenten A und B jeweils 0,0 Gew.-% bis 5,0 Gew.-% Hilfsstoffe zum Steuern der Reaktivität zwischen Harz und Härter, 1,0 Gew.-% bis 10,0 Gew.-% haftvermittelnde Bestandteile, i0,0 Gew.-% bis 20,0 Gew.-% inerte Verdünner, 0,0 Gew.-% bis 10,0 Gew.-% Entlüfter, Verlaufsmittel, Benetzungshilfsmittel, Emulgatoren, Reaktionsbeschleuniger oder Katalysatoren, 0,0 Gew.-% bis 6,0 Gew.-% Thixotropiermittel und 0,0 Gew.-% bis 50,0 Gew.-% Füllstoffe und Pigmente enthalten.

Weitere Vorteile und Einzelheiten ergeben sich aus der nachfolgenden Beschreibung.

### Ausführungsbeispiel

Die Erfindung soll nachstehend an zwei Ausführungsbeispielen näher erläutert werden.

### Beispiel 1

Mit dem erfindungsgemäßen Beschichtungssystem sollen der Stahlbetonfläche eines 380 m³ großen Tauchbeckens einer Anlage zur kathodischen Tauchlackierung (KTL) Risse mit einer Breite von bis zu 0,45 mm flüssigkeitsdicht überbrückt werden. Im Tauchbecken kommen Tauchlackdispersionen zum Einsatz, die Bindemittel, Pigmente, wassermischbare organische Lösemittel, demineralisiertes Wasser, Säuren und Additive enthalten.
Auf die zuvor gereinigte und getrocknete Betonoberfläche wird eine Grundierung aus einem lösemittelfreien Gemisch auf Bisphenol A- und/oder Bisphenol F-Basis, Glycidylether als Reaktionsverdünner als Komponente A, einem Härtungsmittel auf Basis eines Aminadduktes aus einem Polyamin und/oder aus Basisaminen mit primären, sekundären und tertiären Aminogruppen als Komponente B sowie Hilfsstoffe aufgebracht.

Das Mischungsverhältnis der Komponenten A:B für die Grundierung liegt bei 2:1 Volumenanteile. Die Schichtdicke der Grundierung beträgt 0,1 mm. Die Wartezeit für die vollständige Aushärtung der Grundierung, d.h. der vollen mechanischen und chemischen Belastbarkeit, beträgt 2 bis 3 Tage.
Nach einer Wartezeit von 6 Stunden, in der die Aushärtung der Grundierung nicht vollständig abgeschlossen und die Grundierung noch im klebrigen (nassen) Zustand ist, wird das erfindungsgemäße Gemisch für die Deckschicht aufgebacht, die folgende Zusammensetzung hat:

### Komponente A:

20,00 Gew.-% Epichlorhydrinharz vom Bisphenol-A- oder -F-Typ;
9,50 Gew.-% Glycidylether;
6,50 Gew.-% Polyamine und Addukthärter;
6,00 Gew.-% Polyaminoamide;

### Komponente B:

7,00 Gew.-% Umsetzungsprodukt von Polyamin mit Acrylnitril;
1,50 Gew.-% Phenol-Derivate;
6,70 Gew.-% funktionelles Siliconharz;
6,00 Gew.-% hochsiedende Kohlenwasserstoffharze/inerte Verdünner;
1,00 Gew.-% Entlüfter, Verlaufsmittel, Benetzungsmittel;
0,30 Gew.-% Thixotropiermittel;
35,50 Gew.-% Füllstoffe und Pigmente.

Durch den Auftrag des Gemisches der Deckschicht auf das noch nicht vollständig ausgehärtete Gemisch der Grundierung kommt es zur chemischen Reaktion zwischen den Gemischen, so dass ein chemischer Verbund von Grundierung und Deckschicht entsteht, der gleichzeitig die Rissüberbrückung und die Dichtheit gewährleistet.
Die intern reaktiv wirkende Verbindung, in diesem Beispiel funktionelles Silikonharz in der Komponente B, bewirkt, dass der chemische Verbund im ausgehärteten Zustand eine hohe Dauerelastizität besitzt, wohingegen das hohe Haftvermögen durch die haftvermittelnde Verbindung, hier Epoxid-Silicon-Copolymer in der Komponente A, erreicht wird.

Das Mischungsverhältnis von Harz (Komponente A) und Härtungsmittel (Komponente B) liegt bei 1:1 Gewichtsteile. Die Schichtdicke der Deckschicht beträgt 1,4 mm, ihre Dichte 1,50 g/m³ und der theoretisch berechnete Vernetzungsgrad für die fertige Deckschicht 120%.

Nach vollständiger Aushärtung von Grundierung und Deckschicht erreicht das erfindungsgemäße Beschichtungssystem eine Rissüberbrückung von 0,5 mm und ist chemikalienbeständig

### Beispiel 2

Eine Auffangwanne aus Stahlbeton für einen Schwefelsäuretank mit 100 m³-Inhalt soll mit dem erfindungsgemäßen Beschichtungssystem abgedichtet werden. Die Stahlbetonfläche weist oberflächennahe Risse mit einer Breite von bis zu 0,5 mm auf, die flüssigkeitsdicht und chemikalienbeständig gegen Schwefelsäure abgedichtet und überbrückt werden sollen.
Das Gemisch für die Grundierung entspricht dem Gemisch der Grundierung im Beispiel 1.
Das Gemisch für die Deckschicht hat nachstehende Zusammensetzung:

### Komponente A:

36,00 Gew.-% Epichlorhydrinharz vom Bisphenol-A- oder -F-Typ;
9,00 Gew.-% Glycidylether;
5,00 Gew.-% Epoxid-Silicon-Copolymer;

### Komponente B:

10,70 Gew.-% Polyamine und Addukthärter;
9,00 Gew.-% Polyaminoamide;
7,00 Gew.-% Umsetzungsprodukt von Polyamin mit Acrylnitril;
3,50 Gew.-% funktionelles Siliconharz;
3,00 Gew.-% hochsiedende Kohlenwasserstoffharze/inerte Verdünner;
3,50 Gew.-% Entlüfter, Verlaufsmittel, Benetzungsmittel;
1,30 Gew.-% Thixotropiermittel;
12,00 Gew.-% Füllstoffe und Pigmente.

Die Wartezeit für die vollständige Aushärtung der Grundierung und Deckschicht, d.h. der vollen mechanischen und chemischen Belastbarkeit, beträgt wie im ersten Beispiel 2 bis 3 Tage.
Nach einer Wartezeit von 8 Stunden, in der die Aushärtung der Grundierung nicht vollständig abgeschlossen und die Grundierung noch im nassen Zustand ist, wird das erfindungsgemäße Gemisch für die Deckschicht aufgebacht, so dass eine chemische Reaktion zwischen den Stoffen der Grundierung und der Deckschicht stattfinden kann, die gewissermaßen einen fließenden Übergang in den mechanischphysikalischen und chemischen Eigenschaften im Verbund, d.h. von der Grundierung zur Deckschicht, bewirken.

Das Mischungsverhältnis von Harz (Komponente A) und Härtungsmittel (Komponente B) liegt bei 1:1 Gewichtsteile. Die Schichtdicke der Deckschicht beträgt 1,6 mm, ihre Dichte 1,24 g/m³. Der theoretisch berechnete Vernetzungsgrad beträgt 95%.
Das erfindungsgemäße Beschichtungssystem ist in der Lage, Risse mit einer Breite von bis zu 0,5 mm flüssigkeitsdicht zu überbrücken und ist gegen Schwefelsäure beständig.
Die intern reaktive Verbindung in der Komponente B und die haftvermittelnde Verbindung in der Komponente A des Gemisches für die Deckschicht entsprechen denen des Beispiels 1.

## Patentansprüche

1. Beschichtungssystem zum flüssigkeitsdichten Überbrücken von durch dynamisch und/oder mechanisch Belastungen hervorgerufene oberflächennahe Risse in mit aggressiven Flüssigkeiten beaufschlagten Untergründen, beispielsweise zementgebundenen Böden, Betonflächen von Auffangwannen, Auffangräumen und Anlagen zum Lagern, Umfüllen und Umschlagen dieser Flüssigkeiten o. dgl., mit einer auf dem Untergrund aufgebrachten Grundierung aus Epichlorhydrinharz und einer Epichlorhydrinharz-Deckschicht, wobei die Grundierung und die Deckschicht jeweils unterschiedlich formuliert sind und aus einem lösemittelfreien Gemisch auf Bisphenol A- und/oder Bisphenol F-Basis, Glycidylether als Reaktionsverdünner, einem Härtungsmittel auf Basis eines Aminadduktes aus einem Polyamin und/oder aus Basisaminen mit primären, sekundären und tertiären Aminogruppen und Hilfsstoffe im unausgehärteten Zustand bestehen und das Mischungsverhältnis von Harz (Kompomente A) und Härtungsmittel (Komponente B) für die Grundierung 2:1 und für die Deckschicht 1:1 beträgt, **dadurch gekennzeichnet, dass** die Komponente A und/oder Komponente B der Deckschicht jeweils bezogen auf die Gesamtmenge aller Komponenten bezogen enthalten:
a) zusätzlich intern reaktiv auf die Dauerelastizität wirkende Verbindungen zwischen 2 und 20 Gew.-%, welche mit Epoxidharzanteilen verknüpfte funktionelle Butadien-Acrylnitrilkautschuke, hyperverzweigte Polymere, Epoxid-Silikon-Copolymere, Siliconkautschukpartikel, funktionelle Silikonharze, Umsetzungsprodukte von Aminen, Amiden, Aminoamiden mit Acrylnitril oder Kautschuke oder deren Gemische umfassen, und
b) haftvermittelnde Verbindungen zwischen 1 und 10 Gew.-%, die Alkoxysilane, Vinylpyrrolidone, Vinylimidazole, Peptide, silangepfropfte Polymere, säure- und aminfunktionelle Polymere, Alkoholethoxylate, Phosphorsäureester oder Aluminate, Titanate, Zirkonate oder Gemische daraus umfassen, wobei die Deckschicht mit der noch nicht vollständig ausgehärteten Grundierung einen innigen flüssigkeitsundurchlässigen und chemisch beständigen zähelastischen, Risse bis zu einer Breite von maximal 1,0 mm überbrückenden Verbund im ausgehärteten Zustand bildet, der entstehende Risse bis zu einer Breite von maximal 1,0 mm überbrückt.

2. Beschichtungssystem nach Anspruch 1, **dadurch gekennzeichnet, dass** die Deckschicht aus einer einzigen Lage gebildet ist, die aus der Komponente A mit 20,0 bis 50,0 Gew.-% Epichlorhydrinharz vom Bisphenol-A und/oder F-Typ, 5,0 bis 30 Gew.-% Reaktivverdünner, 2,0 bis 20 Gew.-% epoxidhaltige Verbindungen mit adduktierten oder vorpolymerisierten Bestandteilen für eine dauerhafte Elastizität im Harz und der Komponente B mit 5,0 bis 30 Gew.-% primären und/oder sekundären Aminen und ihren Addukten mit epoxidhaltigen Verbindungen oder deren Gemischen sowie 0,0 Gew.-% bis 25,0 Gew.-% Polyamide, Polyaminoamide oder Gemische daraus, 5,0 bis 25 Gew.-% Umsetzungsprodukte von Aminen, Amiden Aminoamiden mit Acrylnitril oder Kautschuken oder deren Gemisch besteht, wobei die Komponenten A und B jeweils 0,0 Gew.-% bis 5,0 Gew.-% Hilfsstoffe zum Steuern der Reaktivität zwischen Harz und Härter, 1,0 Gew.-% bis 10,0 Gew.-% haftvermittelnde Bestandteile, i0,0 Gew.-% bis 20,0 Gew.-% inerte Verdünner, 0,0 Gew.-% bis 10,0 Gew.-% Entlüfter, Verlaufsmittel, Benetzungshilfsmittel, Emulgatoren, Reaktionsbeschleuniger oder Katalysatoren, 0,0 Gew.-% bis 6,0 Gew.-% Thixotropiermittel und 0,0 Gew.-% bis 50,0 Gew.-% Füllstoffe und Pigmente enthalten.

3. Beschichtungssystem nach Anspruch 2, **dadurch gekennzeichnet, dass** der Reaktivverdünner mono-, di-, tri- oder höher funktionelle epoxidhaltige Verbindungen, beispielsweise C12-C14-monoglycidylether, C13-C15-monoglycidylylether, Ethylhexylmonoglycidylether, p-tert.Butyl-phenylglycidylether, Butylmonoglycidylether, Butandioldiglycidylether, Hexadioldiglycidylether, Trimethylolpropantriglycidylether oder deren Gemische, umfasst.

4. Beschichtungssystem nach Anspruch 2, **dadurch gekennzeichnet, dass** die Hilfsstoffe zum Steuern der Reaktivität Salicylsäure, p-Toluolsulfonsäure oder ihre Ester, Phenol oder Phenol-Derivate mit sauren OH-Gruppen oder Gemische daraus umfassen.

5. Beschichtungssystem nach Anspruch 2, **dadurch gekennzeichnet, dass** die inerten Verdünner hochsiedende Ester der Adipinsäure, Phthalsäure oder Terephthalsäure, Benzoate, hochsiedende Kohlenwasserstoffe und Kohlenwasserstoffharze umfassen.

6. Beschichtungssystem nach Anspruch 2, **dadurch gekennzeichnet, dass** die Füllstoffe und Pigmente Quarze, Talke, Kaoline, Schwerspate, Titandioxide oder Farbpigmente umfassen.

7. Beschichtungssystem nach Anspruch 1, **dadurch gekennzeichnet, dass** die Deckschicht eine Dicke zwischen 1,2 und 2,0 mm aufweist.

8. Beschichtungssystem nach Anspruch 1, **dadurch gekennzeichnet, dass** der Verbund Risse mit einer Breite zwischen 0,2 mm und 1,0 mm überbrückt.

9. Beschichtungssystem nach Anspruch 1, **dadurch gekennzeichnet, dass** die Grundierung eine Dicke von 0,05 bis 0,3 mm aufweist.

10. Verfahren zum flüssigkeitsdichten Überbrücken von durch dynamisch und/oder mechanischen Belastungen hervorgerufene Risse in mit aggressiven Flüssigkeiten beaufschlagten Untergründen, beispielsweise zementgebundene Böden bzw. Betonflächen von Auffangwannen, Auffangräumen und Anlagen zum Lagern, Umfüllen und Umschlagen dieser Flüssigkeiten, bei der auf den Untergrund eine Grundierung aus Epichlorhydrinharz und eine Epichlorhydrinharz-Deckschicht durch Spachteln, Streichen, Rollen oder Spritzen aufgebracht wird, wobei die Grundierung und die Deckschicht jeweils unterschiedlich formuliert sind und ein lösemittelfreies Gemisch einer Komponente A auf Bisphenol A- und/oder Bisphenol F-Basis, Glycidylether als Reaktionsverdünner und einer Komponente B aus einem Härtungsmittel eines Aminadduktes aus einem Polyamin und/oder aus Basisaminen mit primären, sekundären und tertiären Aminogruppen und Hilfsstoffe bei mindestens 5 °C bis maximal 30 °C zur Reaktion gebracht wird, wobei das Mischungsverhältnis der Komponente A zur Komponente B für die Grundierung auf 2:1 und für die Deckschicht auf 1:1 eingestellt wird, **dadurch gekennzeichnet, dass** der Komponente A und/oder Komponente B des Gemisches für die Deckschicht jeweils bezogen auf die Gesamtmange aller Komponenten zugesetzt werden:
a) zusätzlich intern reaktiv auf die Dauerelastizität wirkende Verbindungen zwischen 2 und 20 Gew.-%, wobei mit Epoxidharzanteilen verknüpfte funktionelle Butadien-Acrylnitrilkautschuke, hyperverzweigte Polymere, Expoxid-Silicon-Copolymere, Siliconkautschukpartikel, funktionelle Siliconharze, Umsetzungsprodukte von Aminen, Amiden, Aminoamiden mit Acrylnitril oder Kautschuken oder deren Gemische verwendet werden und
b) haftvermittelnde Verbindungen zwischen 1 und 10 Gew.-%, wobei als haftvermittelnde Verbindungen Alkoxysilane, Vinylpyrrolidone, Vinylimidazole, Peptide, silangepfropfte Polymere, säure- und aminfunktionelle Polymere, Alkoholethoxylate, Phosphorsäureester oder Aluminate, Titanate, Zirkonate oder Gemische daraus verwendet werden, und dass das Gemisch auf die nicht vollständig ausgehärtete, noch nasse Grundierung nach einer Wartezeit von mindestens 6 bis maximal 8 Stunden aufgetragen wird, so dass die Grundierung und die Deckschicht gemeinsam zu einem innigen flüssigkeitsundurchlässigen, chemisch beständigen zähelastischen, Risse bis zu einer Breite von maximal 1,0 mm überbrückenden Verbund beim Aushärten reagieren.

11. Verfahren nach Anspruch 10, **dadurch gekennzeichnet, dass** als Komponente A für die Deckschicht 20,0 bis 50,0 Gew.-% Epichlorhydrinharz vom Bisphenol-A- und/oder -F-Typ, 5,0 bis 30 Gew.-% Reaktivverdünner, 2,0 bis 20 Gew.-% epoxidhaltige Verbindungen mit adduktierten oder vorpolymerisierten Bestandteilen für eine dauerhafte Elastizität im Harz und als Komponente B 5,0 bis 30 Gew.-% primäre und/oder sekundäre Amine und ihren Addukte mit epoxidhaltigen Verbindungen oder deren Gemischen sowie 0,0 Gew.-% bis 25,0 Gew.-% Polyamide, Polyaminoamide oder Gemische daraus, 5,0 bis 25 Gew.-% Umsetzungsprodukte von Aminen, Amiden Aminoamiden mit Acrylnitril oder Kautschuken oder deren Gemisch verwendet wird, wobei die Komponenten A und B jeweils 0,0 Gew.-% bis 5,0 Gew.-% Hilfsstoffe zum Steuern der Reaktivität zwischen Harz und Härter, 1,0 Gew.-% bis 10,0 Gew.-% haftvermittelnde Bestandteile, i0,0 Gew.-% bis 20,0 Gew.-% inerte Verdünner, 0,0 Gew.-% bis 10,0 Gew.-% Entlüfter, Verlaufsmittel, Benetzungshilfsmittel, Emulgatoren, Reaktionsbeschleuniger oder Katalysatoren, 0,0 Gew.-% bis 6,0 Gew.-% Thixotropiermittel und 0,0 Gew.-% bis 50,0 Gew.-% Füllstoffe und Pigmente enthalten.

12. Verfahren nach Anspruch 10, **dadurch gekennzeichnet, dass** als Reaktivverdünner mono-, di-, tri- oder höher funktionelle epoxidhaltige Verbindungen, beispielsweise C12-C14-monoglycidylether, C13-C15-monoglycidylylether, Ethylhexylmonoglycidylether, p-tert.Butyl-phenylglycidylether, Butylmonoglycidylether, Butandioldiglycidylether, Hexadioldiglycidylether, Trimethylolpropantriglycidylether oder deren Gemische verwendet werden.

13. Verfahren nach Anspruch 10, **dadurch gekennzeichnet, dass** als Hilfsstoffe zum Steuern der Reaktivität Salicylsäure, p-Toluolsulfonsäure oder ihre Ester, Phenol oder Phenol-Derivate mit sauren OH-Gruppen oder Gemische daraus verwendet werden.

14. Verfahren nach Anspruch 10, **dadurch gekennzeichnet, dass** als inerte Verdünner hochsiedende Ester der Adipinsäure, Phthalsäure oder Terephthalsäure, Benzoate, hochsiedende Kohlenwasserstoffe und Kohlenwasserstoffharze verwendet werden.

15. Verfahren nach Anspruch 10, **dadurch gekennzeichnet, dass** als Füllstoffe und Pigmente Quarze, Talke, Kaoline, Schwerspate, Titandioxide oder Farbpigmente verwendet werden.

## Claims

1. A coating system for liquid-tight bridging of near-surface cracks induced by dynamic and/or mechanical stress in substrates exposed to aggressive liquids, for example cement-bound floors or concrete surfaces of bunds, catch chambers and installations for the storage, transfer and handling of these liquids or the like, having a primer of epichlorohydrin resin applied to the substrate and an epichlorohydrin resin topcoat, the primer and the topcoat in each case being differently formulated and consisting in the uncured state of a solvent-free mixture based on bisphenol A and/or bisphenol F, glycidyl ethers as reactive diluents, a curing agent based on an amine adduct of a polyamine and/or from basic amines with primary, secondary and tertiary amino groups and auxiliary substances and the mixing ratio of resin (component A) and curing agent (component B) amounting to 2:1 for the primer and to 1:1 for the topcoat, **characterised in that** component A and/or component B of the topcoat contain, in each case relative to the total quantity of all the components:
a) between 2 and 20 wt.% of additionally internally reactive compounds with an effect on long-term resilience, which comprise functional butadiene-acrylonitrile rubbers linked with epoxy resin moieties, hyperbranched polymers, epoxy-silicone copolymers, silicone rubber particles, functional silicone resins, reaction products of amines, amides or aminoamides with acrylonitrile or rubbers or mixtures thereof, and
b) between 1 and 10 wt.% of adhesion-enhancing compounds which comprise alkoxysilanes, vinylpyrrolidones, vinylimid-azoles, peptides, silane-grafted polymers, acid- and amine-functional polymers, alcohol ethoxylates, phosphoric acid esters or aluminates, titanates, zirconates or mixtures thereof, wherein the topcoat forms with the as yet incompletely cured primer an intimate, liquid-impermeable, chemically resistant, tough and resilient bond which bridges cracks of up to a width of at most 1.0 mm in the cured state and bridges any cracks which arise up to a width of at most 1.0 mm.

2. A coating system according to claim 1, **characterised in that** the topcoat is formed from a single layer which consists of component A with 20.0 to 50.0 wt.% of bisphenol A and/or F type epichlorohydrin resin, 5.0 to 30 wt.% of reactive diluents and 2.0 to 20 wt.% of epoxy-containing compounds with constituents having undergone an addition or prepolymerisation reaction for durable resilience in the resin and of component B with 5.0 to 30 wt.% of primary and/or secondary amines and the adducts thereof with epoxy-containing compounds or mixtures thereof and 0.0 wt.% to 25.0 wt.% of polyamides, polyaminoamides or mixtures thereof, 5.0 to 25 wt.% of reaction products of amines, amides, aminoamides with acrylonitrile or rubbers or mixtures thereof, wherein components A and B in each case contain 0.0 wt.% to 5.0 wt.% of auxiliary substances for controlling reactivity between resin and curing agent, 1.0 wt.% to 10.0 wt.% of adhesion-enhancing constituents, 10.0 wt.% to 20.0 wt.% of inert diluents, 0.0 wt.% to 10.0 wt.% of deaerating agents, levelling agents, wetting auxiliaries, emulsifiers, reaction accelerators or catalysts, 0.0 wt.% to 6.0 wt.% of thixotroping agents and 0.0 wt.% to 50.0 wt.% of fillers and pigments.

3. A coating system according to claim 2, **characterised in that** the reactive diluent comprises mono-, di-, tri- or more highly functional epoxy-containing compounds, for example C12-C14 monoglycidyl ethers, C13-C15 monoglycidylyl ethers, ethylhexyl monoglycidyl ether, p-tert.-butylphenyl glycidyl ether, butyl monoglycidyl ether, butanediol diglycidyl ether, hexadiol diglycidyl ether, trimethylolpropane triglycidyl ether or mixtures thereof.

4. A coating system according to claim 2, **characterised in that** the auxiliary substances for controlling reactivity comprise salicylic acid, p-toluenesulfonic acid or the esters thereof, phenol or phenol derivatives with acidic OH groups or mixtures thereof.

5. A coating system according to claim 2, **characterised in that** the inert diluents comprise high-boiling esters of adipic acid, phthalic acid or terephthalic acid, benzoates, high-boiling hydrocarbons and hydrocarbon resins.

6. A coating system according to claim 2, **characterised in that** the fillers and pigments comprise quartzes, talcums, kaolins, barytes, titanium dioxides or colouring pigments.

7. A coating system according to claim 1, **characterised in that** the topcoat has a thickness of between 1.2 and 2.0 mm.

8. A coating system according to claim 1, **characterised in that** the bond bridges cracks having a width of between 0.2 mm and 1.0 mm.

9. A coating system according to claim 1, **characterised in that** the primer has a thickness of 0.05 to 0.3 mm.

10. A method for liquid-tight bridging of cracks induced by dynamic and/or mechanical stress in substrates exposed to aggressive liquids, for example cement-bound floors or concrete surfaces of bunds, catch chambers and installations for the storage, transfer and handling of these liquids, in which a primer of epichlorohydrin resin and an epichlorohydrin resin topcoat are applied to the substrate by filler knife, brush, roller or spray application, the primer and the topcoat in each case being differently formulated and a solvent-free mixture of a component A based on bisphenol A and/or bisphenol F, glycidyl ethers as reactive diluents and of a component B prepared from a curing agent of an amine adduct of a polyamine and/or from basic amines with primary, secondary and tertiary amino groups and auxiliary substances being reacted at at least 5°C to at most 30°C, the mixing ratio of component A to component B being adjusted to 2:1 for the primer and to 1:1 for the topcoat, **characterised in that** the following are added to component A and/or component B of the mixture for the topcoat, in each case relative to the total quantity of all the components:
a) between 2 and 20 wt.% of additionally internally reactive compounds with an effect on long-term resilience, wherein functional butadiene-acrylonitrile rubbers linked with epoxy resin moieties, hyperbranched polymers, epoxy-silicone copolymers, silicone rubber particles, functional silicone resins, reaction products of amines, amides or aminoamides with acrylonitrile or rubbers or mixtures thereof are used, and
b) between 1 and 10 wt.% of adhesion-enhancing compounds wherein alkoxysilanes, vinylpyrrolidones, vinylimidazoles, peptides, silane-grafted polymers, acid- and amine-functional polymers, alcohol ethoxylates, phosphoric acid esters or aluminates, titanates, zirconates or mixtures thereof are used as adhesion-enhancing compounds, and **in that** the mixture is applied onto the incompletely cured, still wet primer after a waiting period of at least 6 to at most 8 hours, such that the primer and the topcoat jointly react on curing to form an intimate, liquid-impermeable, chemically resistant, tough and resilient bond which bridges cracks up to a width of at most 1.0 mm.

11. A method according to claim 10, **characterised in that**, for the topcoat, 20.0 to 50.0 wt.% of epichlorohydrin resin of bisphenol A and/or F type, 5.0 to 30 wt.% of reactive diluents and 2.0 to 20 wt.% of epoxy-containing compounds with constituents having undergone an addition or prepolymerisation reaction for durable resilience in the resin are used as component A and 5.0 to 30 wt.% of primary and/or secondary amines and the adducts thereof with epoxy-containing compounds or mixtures thereof and 0.0 wt.% to 25.0 wt.% of polyamides, polyaminoamides or mixtures thereof, 5.0 to 25 wt.% of reaction products of amines, amides or aminoamides with acrylonitrile or rubbers or mixtures thereof are used as component B, wherein components A and B in each case contain 0.0 wt.% to 5.0 wt.% of auxiliary substances for controlling reactivity between resin and curing agent, 1.0 wt.% to 10.0 wt.% of adhesion-enhancing constituents, 10.0 wt.% to 20.0 wt.% of inert diluents, 0.0 wt.% to 10.0 wt.% of deaerating agents, levelling agents, wetting auxiliaries, emulsifiers, reaction accelerators or catalysts, 0.0 wt.% to 6.0 wt.% of thixotroping agents and 0.0 wt.% to 50.0 wt.% of fillers and pigments.

12. A method according to claim 10, **characterised in that** the reactive diluents used are mono-, di-, tri- or more highly functional epoxy-containing compounds, for example C12-C14 monoglycidyl ethers, C13-C15 monoglycidylyl ethers, ethylhexyl monoglycidyl ether, p-tert.-butylphenyl glycidyl ether, butyl monoglycidyl ether, butanediol diglycidyl ether, hexadiol diglycidyl ether, trimethylolpropane triglycidyl ether or mixtures thereof.

13. A method according to claim 10, **characterised in that** salicylic acid, p-toluenesulfonic acid or the esters thereof, phenol or phenol derivatives with acidic OH groups or mixtures thereof are used as the auxiliary substances for controlling reactivity.

14. A method according to claim 10, **characterised in that** high-boiling esters of adipic acid, phthalic acid or terephthalic acid, benzoates, high-boiling hydrocarbons and hydrocarbon resins are used as the inert diluents.

15. A method according to claim 10, **characterised in that** quartzes, talcums, kaolins, barytes, titanium dioxides or colouring pigments are used as the fillers and pigments.

## Revendications

1. Système de revêtement destiné à combler d'une manière étanche aux liquides des fissures proches de la surface provoquées par des charges dynamiques et/ou mécaniques dans des substrats sollicités par des liquides agressifs, par exemple des sols liés par du ciment, des surfaces de béton de cuves collectrices, d'espaces de collecte et d'installations pour l'entreposage, le transvasement et le transbordement de ces liquides ou analogues, comprenant une couche d'apprêt appliquée sur le substrat constituée d'une résine d'épichlorhydrine et une couche supérieure à base d'une résine d'épichlorhydrine ; dans lequel la couche d'apprêt et la couche supérieure présentent des formulations respectivement différentes et sont constituées à l'état non durci d'un mélange exempt de solvant à base de bisphénol A et/ou de bisphénol F, d'éther glycidylique à titre de diluant réactionnel, d'un agent de durcissement à base d'un adduit d'amine d'une polyamine et/ou d'amines basiques comprenant des groupes amino primaires, secondaires et tertiaires, et d'adjuvants, et le rapport de mélange de la résine (composant A) et de l'agent de durcissement (composant B) pour la couche d'apprêt s'élève à 2:1 et pour la couche supérieure s'élève à 1:1, **caractérisé en ce que** le composant A et/ou le composant B de la couche supérieure contiennent, chaque fois rapporté à la quantité totale de tous les composants :
a) en outre des composés agissant par réaction interne en ce qui concerne l'élasticité permanente entre 2 et 20 % en poids, qui comprennent des caoutchoucs fonctionnels de butadiène-acrylonitrile auquel sont liées des fractions de résine époxyde, des polymères hyperramifiés, des copolymères d'époxyde-silicone, des particules de caoutchouc de silicone, des résines de silicone fonctionnelles, des produits réactionnels d'amines, d'amides, d'aminoamides avec de l'acrylonitrile ou des caoutchoucs, ou encore leurs mélanges ; et
b) des composés favorisant l'adhérence entre 1 et 10 % en poids, qui comprennent des alcoxysilanes, des vinylpyrrolidones, des vinylimidazoles, des peptides, des polymères greffés au silane, des polymères possédant une fonctionnalité acide et une fonctionnalité amine, des éthoxylates d'alcools, des esters de l'acide phosphorique ou des aluminates, des titanates, des zirconates, ou encore leurs mélanges ; dans lequel la couche supérieure avec la couche d'apprêt qui n'a pas encore été complètement durcie forme, à l'état complètement durci, un composite cohérent, viscoélastiques, résistant aux produits chimiques et imperméables aux liquides, qui comble des fissures jusqu'à concurrence d'une largeur maximale de 1,0 mm, et qui comble des fissures en formation à concurrence d'une largeur maximale de 1,0 mm.

2. Système de revêtement selon la revendication 1, **caractérisé en ce que** la couche supérieure est réalisée à partir d'une seule couche qui est constituée par le composant A comprenant de 20,0 à 50,0 % en poids d'une résine d'épichlorhydrine de bisphénol de type A et/ou de type F, de 5,0 à 30 % en poids d'un diluant réactif, de 2,0 à 20 % en poids de composés époxydés comprenant des constituants ajoutés ou prépolymérisés pour obtenir une élasticité durable dans la résine, et par le composant B comprenant de 5,0 à 30 % en poids d'amines primaires et/ou secondaires ainsi que leurs adduits avec des composés époxydés, ou encore leurs mélanges, de même que de 0,0 % en poids à 25,0 % en poids de polyamides, de polyaminoamides ou de leurs mélanges, de 5,0 à 25 % en poids de produits réactionnels d'amines, d'amides, d'aminoamides avec de l'acrylonitrile ou des caoutchoucs, ou encore leurs mélanges, dans lequel les composants A et B contiennent respectivement de 0,0 % en poids à 5,0 % en poids d'adjuvants pour le réglage de la réactivité entre la résine et le durcisseur, de 1,0 % en poids à 10,0 % en poids de constituants favorisant l'adhérence, de 10,0 % en poids à 20,0 % en poids de diluants inertes, de 0,0 % en poids à 10,0 % en poids d'agents de désaération, d'agents de nivellement, d'adjuvants de mouillage, d'émulsifiants, d'accélérateurs de la réaction ou de catalyseurs, de 0,0 % en poids à 6,0 % en poids d'agents thixotropes et de 0,0 % en poids à 50,0 % en poids de matières de charge et de pigments.

3. Système de revêtement selon la revendication 2, **caractérisé en ce que** le diluant réactif comprend des composés époxydés monofonctionnels, difonctionnels, trifonctionnels ou possédant une fonctionnalité encore supérieure, par exemple des éthers monoglycidyliques en C₁₂-C₁₄, des éthers monoglycidylyliques en C₁₃-C₁₅, des éthers monoglycidyliques d'éthylhexyle, des éthers glycidyliques de p-tert-butylphényle, des éthers monoglycidyliques de butyle, des éthers diglycidyliques de butanediol, des éthers diglycidyliques d'hexadiol, des éthers triglycidyliques de triméthylolpropane, ou leurs mélanges.

4. Système de revêtement selon la revendication 2, **caractérisé en ce que** les adjuvants destinés au réglage de la réactivité comprennent de l'acide salicylique, de l'acide p-toluènesulfonique ou ses esters, du phénol ou des dérivés du phénol comprenant des groupes OH acides, ou encore leurs mélanges.

5. Système de revêtement selon la revendication 2, **caractérisé en ce que** les diluants inertes comprennent des esters à point d'ébullition élevé de l'acide adipique, de l'acide phtalique ou de l'acide téréphtalique, des benzoates, des hydrocarbures et des résines d'hydrocarbures à point d'ébullition élevé.

6. Système de revêtement selon la revendication 2, **caractérisé en ce que** les matières de charge et les pigments comprennent des quartz, des talcs, des kaolins, des feldspaths, des dioxydes de titane ou des pigments colorés.

7. Système de revêtement selon la revendication 1, **caractérisé en ce que** la couche supérieure présente une épaisseur entre 1,2 et 2,0 mm.

8. Système de revêtement selon la revendication 1, **caractérisé en ce que** le composite comble des fissures dont la largeur se situe entre 0,2 mm et 1,0 mm.

9. Système de revêtement selon la revendication 1, **caractérisé en ce que** la couche d'apprêt présente une épaisseur de 0,05 à 0,3 mm.

10. Procédé destiné à combler d'une manière étanche aux liquides des fissures provoquées par des charges dynamiques et/ou mécaniques dans des substrats sollicités par des liquides agressifs, par exemple des sols liés par du ciment, respectivement des surfaces de béton de cuves collectrices, d'espaces de collecte et d'installations pour l'entreposage, le transvasement et le transbordement de ces liquides, dans lequel on applique, sur le substrat, une couche d'apprêt constituée d'une résine épichlorhydrine et une couche supérieure à base d'une résine épichlorhydrine, via une spatule, un pinceau, un rouleau ou par pulvérisation ; dans lequel la couche d'apprêt et la couche supérieure présentent des formulations respectivement différentes et on fait réagir un mélange exempt de solvant d'un composant A à base de bisphénol A et/ou de bisphénol F, d'éther glycidylique à titre de diluant réactionnel, et d'un composant B constitué d'un agent de durcissement à base d'un adduit d'amine d'une polyamine et/ou d'amines basiques comprenant des groupes amino primaires, secondaires et tertiaires et par des adjuvants, à une température allant d'une température minimale de 5 °C à une température maximale de 30 °C ; dans lequel on règle le rapport de mélange du composant A au composant B pour la couche d'apprêt à une valeur de 2:1 et pour la couche supérieure à une valeur de 1:1, **caractérisé en ce qu'**on ajoute au composant A et/ou au composant B du mélange pour la couche supérieure, chaque fois rapporté à la quantité totale de tous les composants : a) en outre des composés agissant par réactivité interne en ce qui concerne l'élasticité permanente entre 2 et 20 % en poids ; dans lequel on utilise des caoutchoucs fonctionnels de butadiène-acrylonitrile auquel sont liées des fractions de résine époxyde, des polymères hyperramifiés, des copolymères d'époxyde-silicone, des particules de caoutchouc de silicone, des résines de silicone fonctionnelles, des produits réactionnels d'amines, d'amides, d'aminoamides avec de l'acrylonitrile ou des caoutchoucs, ou encore leurs mélanges ; et
b) des composés favorisant l'adhérence entre 1 et 10 % en poids, dans lequel on utilise, à titre de composés favorisant l'adhérence, des alcoxysilanes, des vinylpyrrolidones, des vinylimidazoles, des peptides, des polymères greffés au silane, des polymères possédant une fonctionnalité acide et une fonctionnalité amine, des éthoxylates d'alcools, des esters de l'acide phosphorique ou des aluminates, des titanates, des zirconates, ou encore leurs mélanges ;
et **en ce qu'**on applique le mélange sur la couche d'apprêt qui n'a pas encore été complètement durcie et qui est encore humide, après un temps d'attente d'au moins 6 jusqu'à un maximum de 8 heures, d'une manière telle que la couche d'apprêt et la couche supérieure réagissent de manière conjointe lors du durcissement pour obtenir un composite cohérent, viscoélastiques, résistant aux produits chimiques et imperméables aux liquides, qui comble des fissures jusqu'à concurrence d'une largeur maximale de 1,0 mm.

11. Procédé selon la revendication 10, **caractérisé en ce qu'**on utilise, à titre de composant A, pour la couche supérieure, de 20,0 à 50,0 % en poids d'une résine d'épichlorhydrine de bisphénol de type A et/ou de type F, de 5,0 à 30 % en poids d'un diluant réactif, de 2,0 à 20 % en poids de composés époxydés comprenant des constituants adduits ou prépolymérisés pour obtenir une élasticité durable dans la résine, et à titre de composant B, de 5,0 à 30 % en poids d'amines primaires et/ou secondaires ainsi que de leurs adduits avec des composés époxydés, ou encore leurs mélanges, de même que de 0,0 % en poids à 25,0 % en poids de polyamides, de polyaminoamides ou de leurs mélanges, de 5,0 à 25 % en poids de produits réactionnels d'amines, d'amides, d'aminoamides avec de l'acrylonitrile ou des caoutchoucs ou encore leurs mélanges, dans lequel les composants A et B contiennent respectivement de 0,0 % en poids à 5,0 % en poids d'adjuvants pour le réglage de la réactivité entre la résine et le durcisseur, de 1,0 % en poids à 10,0 % en poids de constituants favorisant l'adhérence, de 10,0 % en poids à 20,0 % en poids de diluants inertes, de 0,0 % en poids à 10,0 % en poids d'agents de désaération, d'agents de nivellement, d'adjuvants de mouillage, d'émulsifiants, d'accélérateurs de la réaction ou de catalyseurs, de 0,0 % en poids à 6,0 % en poids d'agents thixotropes et de 0,0 % en poids à 50,0 % en poids de matières de charge et de pigments.

12. Procédé selon la revendication 10, **caractérisé en ce qu'**on utilise, à titre de diluant réactif, des composés époxydés monofonctionnels, difonctionnels, trifonctionnels ou possédant une fonctionnalité encore supérieure, par exemple des éthers monoglycidyliques en C₁₂-C₁₄, des éthers monoglycidyliques en C₁₃-C₁₅, des éthers monoglycidylyliques d'éthylhexyle, des éthers glycidyliques de p-tert-butylphényle, des éthers monoglycidyliques de butyle, des éthers diglycidyliques de butanediol, des éthers diglycidyliques d'hexadiol, des éthers triglycidyliques de triméthylolpropane, ou leurs mélanges.

13. Procédé selon la revendication 10, **caractérisé en ce qu'**on utilise, à titre d'adjuvants destinés au réglage de la réactivité, de l'acide salicylique, de l'acide p-toluènesulfonique ou ses esters, du phénol ou des dérivés du phénol comprenant des groupes OH acides, ou encore leurs mélanges.

14. Procédé selon la revendication 10, **caractérisé en ce qu'**on utilise, à titre de diluants inertes, des esters à point d'ébullition élevé de l'acide adipique, de l'acide phtalique ou de l'acide téréphtalique, des benzoates, des hydrocarbures et des résines d'hydrocarbures à point d'ébullition élevé.

15. Procédé selon la revendication 10, **caractérisé en ce qu'**on utilise, à titre de matières de charge et de pigments des quartz, des talcs, des kaolins, des feldspaths, des dioxydes de titane ou des pigments colorés.
